# EUROPEAN PATENT APPLICATION

(11) **EP 1 677 387 A1**
(43) Date of publication of application: **05.07.2006**
(21) Application number: 06000086.6
(22) Date of filing: 03.01.2006
(51) Int. Cl.: H01Q 9/04, H01Q 21/28, H01Q 1/24

(54) **Built-in antenna module including a bluetooth radiator in portable wireless terminal**

(30) Priority: 03.01.2005 KR 2005000038
(71) Applicant: Samsung Electronics Co., Ltd., Suwon-si, Gyeonggi-Do (KR)
(72) Inventor: Park, Ju-Sang, c/o 327-1901 Samik Apt., Yeongtong-gu Suwon-si Gyeonggi-do (KR); Kim, Gun-Tae, c/o 228-1706, Sibumdanji woosung, Bundang-gu Sungnam-si Gyeonggi-do (KR); Kim, Hong-Chul, Suwon-si Gyeonggi-do (KR)
(74) Representative: Grünecker, Kinkeldey, Stockmair & Schwanhäusser Anwaltssozietät

(57) **Abstract**

Disclosed is a built-in antenna module for a portable wireless terminal with a mainboard. In the built-in antenna module, a carrier fixed on the mainboard has a top surface with a predetermined area and a side surface with a predetermined height, at least one communication radiator is installed on a first predetermined portion of the top surface of the carrier, and a Bluetooth radiator is installed on a second predetermined portion of the top surface of the carrier. Also, the communication radiator and the Bluetooth radiator are electrically connected to the mainboard. Since the communication radiator and the Bluetooth radiator are installed within the same built-in antenna module of the portable wireless terminal, installation of an additional Bluetooth radiator is not required, thereby reducing the size of the portable wireless terminal.

## Description

The present invention relates to a built-in antenna module in a portable wireless terminal and, more particularly, to a built-in antenna module including a Bluetooth radiator (antenna radiator for Bluetooth) in a portable wireless terminal such that the size of the portable wireless terminal is small and the circuit design is much easier as compared to a portable wireless terminal with the built-in antenna module and the Bluetooth radiator installed separately.

Various mobile wireless terminals using different frequency bands are being introduced, for example, Code Division Multiple Access (CDMA), Personal Communication Service (PCS), Digital Cellular System (DCS), and Global System for Mobile Communication (GSM) terminals. Some mobile wireless terminals are capable of operating over one or more frequency bands. Also, the mobile wireless terminals are becoming smaller, slimmer, and lighter with various designs and functions. Therefore, the designs of the terminals are focused on volume reduction while maintaining or improving the functionality in response to public demand.

In an antenna device of the mobile wireless terminal, a rod antenna (or whip antenna) and a helical antenna have good radiation performance as a result of their omnidirectional radiation pattern. However, the rod and helical antennas are easy to break when dropped and degrade the external appearance and portability of the terminal because they protrude outward when installed in the terminal. Therefore, an antenna installed within the terminal (also called a built-in antenna, internal antenna, or intenna) has been widely used in recent times. Various efforts are also being made to improve the performance and productivity of the built-in antenna.

Meanwhile, Bluetooth terminals operating in about 2.4 GHz frequency band are being introduced as a short-range wireless communication device. For example, communications between devices such as mobile wireless terminals and ear microphones may utilize Bluetooth technology. To use the Bluetooth function, the mobile wireless terminal is provided with a Bluetooth chip (module) and a Bluetooth radiator.

The Bluetooth radiator is mounted on a radio frequency (RF) board of the mobile wireless terminal using a Surface Mount Technology (SMT). Also, a chip antenna is widely used for the Bluetooth radiator.

Therefore, for the mobile wireless terminal to support both telecommunication and short-range communication, it must be equipped with a RF radiator for telecommunication and the separate Bluetooth radiator for the short-range communication. However, this increases the cost of the mobile wireless terminal because the chip antenna for the Bluetooth radiator is expensive. Also, the Bluetooth radiator increases difficulties in the artwork of the circuit board because the Bluetooth radiator has to be mounted in the proximity of the edge of the circuit board without contact to electrical ground surface. Further, the installation of the Bluetooth radiator increases the size of the mobile wireless terminal.

The invention is claimed in the independent claims.

Preferred embodiments are defined in the dependent claims.

The present invention provides a built-in antenna module including a Bluetooth radiator in a portable wireless terminal, the built-in antenna exhibiting a desired radiation property.

The present invention also provides a built-in antenna module including a Bluetooth radiator in a portable wireless terminal in which the Bluetooth radiator is included together with a communication radiator to reduce the size of a mainboard in order to attain a small, slim, and lightweight portable wireless terminal.

Further, the present invention provides a built-in antenna module including a Bluetooth radiator in a portable wireless terminal which enables Bluetooth communication without installing a separate additional and expensive Bluetooth radiator in the portable wireless terminal, thereby reducing the manufacturing cost of the portable wireless terminal.

Further, the present invention provides a built-in antenna module including a Bluetooth radiator in a portable wireless terminal, in which a plate type radiator is used for the Bluetooth radiator to increase radiation performance.

Another aspect of the present invention provides a built-in antenna module for a portable wireless terminal with a mainboard, wherein the built-in antenna module includes a carrier fixed on the mainboard. The carrier has a top surface with a predetermined area and a side surface with a predetermined height; at least one communication radiator is installed on a first predetermined portion of the top surface of the carrier; and a Bluetooth radiator is installed on a second predetermined portion of the top surface of the carrier. Both the communication radiator and the Bluetooth radiator are electrically connected to the mainboard.

According to the present invention, the communication radiator and the Bluetooth radiator are installed within the same built-in antenna module instead of installing a separate Bluetooth radiator. Therefore, an expensive chip antenna used for the conventional Bluetooth radiator is not required. Also, while the chip antenna requires removing a ground surface neighboring the installation location of the chip antenna, the built-in antenna module of the present invention does not require this ground surface removal. That is, the built-in antenna module is free from spatial restrictions.

Also, the Bluetooth radiator may be of the plate type, similar to the communication radiator. The Bluetooth radiator may be formed with a predetermined pattern by slitting for optimized radiation properties.

Further, the communication radiator and the Bluetooth radiator are installed on the carrier having the predetermined height so as to provide sufficient space for the radiators, thereby preventing deformation of the radiators and the resulting degradation in radiation property. In addition, the radiators may come into electrical contact with the mainboard when the carrier is fixed on the mainboard. Consequently, an additional process such as bonding or soldering may be not required to electrically connect the radiators to the mainboard.

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a perspective view of a portable wireless terminal according to the present invention;

FIG. 2 is a bottom perspective view of a portable wireless terminal, showing an installation location of a built-in antenna module according to the present invention; and

FIG. 3 is an exploded perspective view of a built-in antenna module according to the present invention.

Reference will now be made in detail to the preferred embodiments of the present invention, examples of which are illustrated in the accompanying drawings. A detailed description of well-known features will be omitted for conciseness.

A slide type portable wireless terminal with a built-in antenna module is illustrated to describe the present invention. However, the present invention is not limited to the illustrated terminal. The present invention can be applied to various kinds of terminals with a built-in antenna such as a folder type terminal, a flip type terminal, a flip-up type terminal, and a Personal Digital Assistant (PDA) terminal.

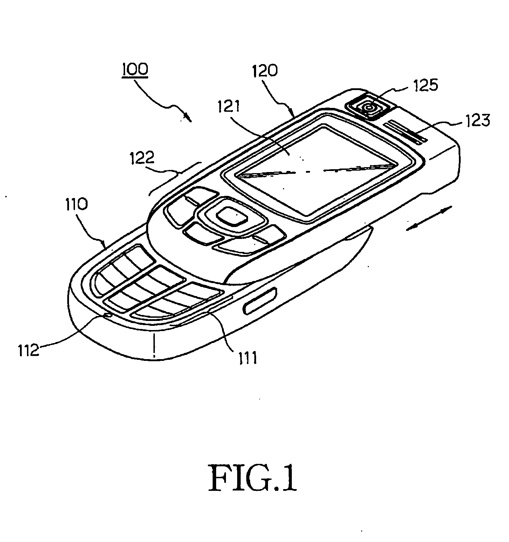

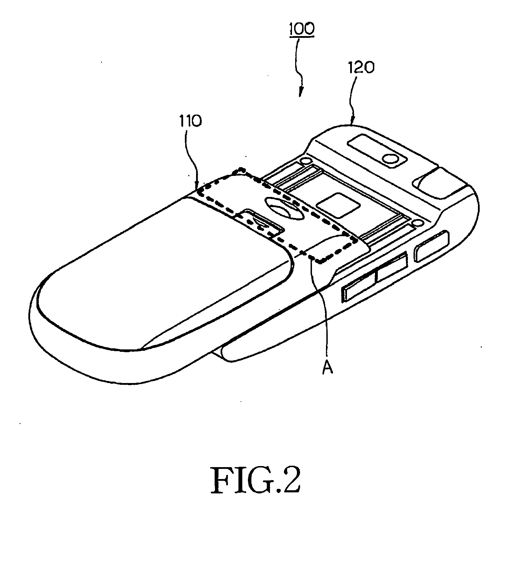

FIG. 1 is a perspective view of a portable wireless terminal according to the present invention, and FIG. 2 is a bottom perspective view of a portable wireless terminal, showing an installation location of a built-in antenna module according to the present invention.

Referring to FIGs. 1 and 2, a portable wireless terminal such as a slide type terminal 100 is illustrated. The slide type terminal 100 includes a main body 110 and a slide body 120 slidably coupled to the main body 110. The slide body 120 is capable of sliding on the main body 110 within a predetermined range in the length directions (refer to a double headed arrow in FIG. 1), such that the slide type terminal 100 can be opened and closed.

The slide body 120 includes a display 121 at a front, a first keypad assembly 122 under the display 121, an earpiece 123 above the display 121, and a camera module 125 beside the earpiece 123. The display 121 may be a wide, high-definition, color Liquid Crystal Display (LCD) module. The user can conveniently operate the slide type terminal 100 using the first keypad assembly 122. The first keypad assembly 122 may include navigation buttons with which the user can operate the slide type terminal 100 even when the slide type terminal 100 is closed. The earpiece 123 is provided to output voice or sound. The camera module 125 is installed to take pictures. The camera module 125 may be rotatably installed on the slide body 120.

The main body 110 may include a second keypad assembly 111 on a front lower portion. The second keypad assembly 111 shows up when the slide terminal is opened. The second keypad assembly 111 may be a 3x4 keypad assembly. Also, the main body 110 includes a microphone 112 to receive the user's voice.

The slide type terminal 100 of FIG. 1 does not have an outwardly protruding antenna module. Instead, the slide type terminal 100 includes a built-in antenna module with a communication radiator to transmit and receive radio waves. The built-in antenna module is installed within a back upper portion of the main body 110 (refer to a dashed box "A" in FIG. 2). Also, the slide type terminal 100 of FIG. 1 includes a Bluetooth module for a short-range (about 10 m) wireless communication. Therefore, the slide type terminal 100 requires an additional Bluetooth radiator for performing the short-range wireless communication. According to the present invention, the Bluetooth radiator is installed in the built-in antenna module instead of separately installing the Bluetooth radiator.

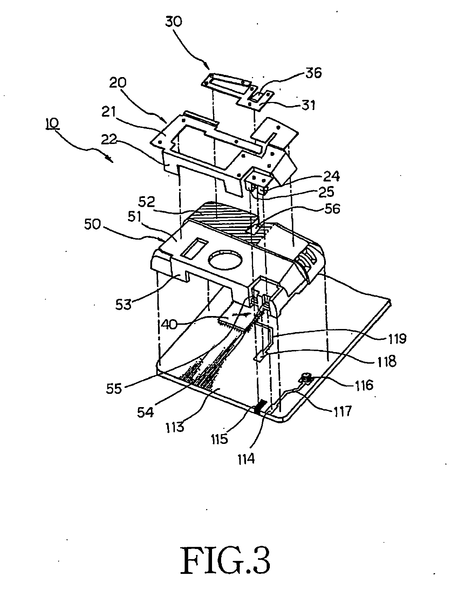

FIG. 3 is an exploded perspective view of a built-in antenna module 10 according to the present invention.

Referring to FIG. 3, a built-in antenna module of the present invention includes a mainboard 113, a carrier 50 of a predetermined size to be installed on the mainboard 113, and a plurality of radiators 20 and 30. The plurality of radiators 20 and 30 include a communication radiator 20 and a Bluetooth radiator 30.

A Planar Inverted F Antenna (PIFA) with two electrical contacts is illustrated as the communication radiator 20. However, a well-known monopole antenna with one electrical contact or a well-known multi-contact antenna with at least three contacts can be used as the communication radiator 20. Also, the illustrated PIFA can be operated in different frequency bans such as DCS, PCS, GSM, and CDMA frequency bands.

The mainboard 113 includes a feed point 114 and a ground point 115 located a predetermined distance from the feed point 114. The feed point 114 and the ground point 115 respectively come into electrical contact with a feed pin 24 and a ground point 25 when assembled. The ground point 115 is electrically connected to a ground surface of the mainboard 113. The feed point 114 is electrically connected with a RF connector 116 installed on the mainboard 113 through a predetermined pattern 117. Also, the mainboard 113 includes a Bluetooth feed point 118 at a predetermined location. The Bluetooth feed point 118 is in contact with a feed pin 36 of the Bluetooth radiator 30 when assembled. The Bluetooth feed pin 36 is electrically connected with a Bluetooth module 40 mounted on the mainboard 113 through a predetermined pattern 119.

The carrier 50 preferably has a rectangular shape. The carrier 50 has first and second top surfaces 51 and 52 on which the radiators 20 and 30 are fixed. Also, the carrier 50 includes a side surface 53 for making a gap between the mainboard 113 and the first and second top surfaces 51 and 52. The construction of the carrier 50, as described above, satisfies the requirements of the PIFA type radiator 20 for an electrical ground point and a gap from the ground point, which are necessary to exhibit a desired radiation property. When assembled, the communication radiator 20 and the Bluetooth radiator 30 are fixed on the first and second top surfaces 51 and 52, respectively. A shaded area marked with hatched lines in FIG. 3 represents the second top surface 52 where the Bluetooth radiator 30 is to be fixed. Contact pins 24, 25, and 26 of the radiators 20 and 30 are respectively connected to the corresponding contact points 114, 115, and 118 of the mainboard 113 when assembled. However, even though the communication radiator 20 and the Bluetooth radiator 30 are fixed on the same carrier 50, they are not electrically connected to each other.

The communication radiator 20 and the Bluetooth radiator 30 are each made of metal plate. The communication radiator 20 has a top surface 21, a vertical surface 22, the feed pin 24, and the ground pin 25. The top surface 21 has a predetermined pattern formed by slitting, and the vertical surface 22 is bent from the top surface 21 at a predetermined angle. The feed pin 24 and ground pin 25 protrude downwardly from a predetermined portion of the communication radiator 20.

The Bluetooth radiator 30 is made of a metal plate. The Bluetooth radiator 30 includes a top surface 31 having a pattern formed by slitting and the feed pin 36 protruding downwardly from a predetermined portion. The feed pin 36 may be formed using the same way of forming as the feed pin 24 and ground pin 25 of the communication radiator 20. The feed pin 36 comes into electrical contact with the Bluetooth feed point 118 of the mainboard 113 when assembled.

Alternately, the communication radiator 20 and Bluetooth radiator 30 may be made of a Flexible Printed Circuit Board (FPCB) with a predetermined pattern. The FPCB may include a conductor exposed on top thereof.

The carrier 50 may be injection molded with synthetic resin, and the communication radiator 20 and the Bluetooth radiator 30 may be fixed on the carrier 50 using well-known methods such as bonding and hot melt adhesion. For example, the carrier 50 is injection molded of a synthetic resin, the communication radiator 20 and the Bluetooth radiator 30 respectively define a plurality of holes, and the communication radiator 20 and the Bluetooth radiator 30 are fixed to the top surface of the carrier 50 by hot melt adhesion. Also, the carrier 50 may be fixed on the mainboard 113 by snap fitting, using a fastener such as a screw, or using other well-known methods.

Further, the carrier 50 defines holes 54, 55, and 56 corresponding to the contact pins 24, 25, and 36 of the radiators 20 and 30. Therefore, the contact pins 24, 25, and 36 may be electrically connected to the contact points 114, 115, 118 of the mainboard 113 through the holes 54, 55, and 56. That is, when the carrier is fixed to the mainboard, the contact pins 24, 25, and 36 may smoothly come into electrical contact with the corresponding contact points 114, 115, and 118.

According to the present invention, the communication radiator and the Bluetooth radiator are installed within the same built-in antenna module of the portable wireless terminal, such that additional installation of the Bluetooth radiator is not required, thereby reducing the size and manufacturing cost of the portable wireless terminal.

The foregoing embodiments are merely exemplary and are not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

## Claims

1. A built-in antenna module for a portable wireless terminal comprising:
a mainboard;
a carrier fixed on the mainboard, the carrier having a top surface with a predetermined area and a side surface with a predetermined height;
at least one communication radiator installed on a first predetermined portion of the top surface of the carrier; and
a Bluetooth radiator installed on a second predetermined portion of the top surface of the carrier,
wherein the communication radiator and the Bluetooth radiator are electrically connected to the mainboard.

2. The built-in antenna module of claim 1, wherein the communication radiator and the Bluetooth radiator are separately installed on the first and second predetermined portions of the top surface of the carrier to prevent electrical connection therebetween.

3. The built-in antenna module of claim 1 or 2, wherein the communication radiator and the Bluetooth radiator are each made of a metal plate having a predetermined pattern formed by slitting.

4. The built-in antenna module of claim 3, wherein the communication radiator is a multi-contact/multi-band Planar Inverted F Antenna, PIFA, with at least two contact points.

5. The built-in antenna module of claim 4, wherein the communication radiator includes:
a downwardly protruding feed pin electrically connected to a feed point of the mainboard, the feed point being electrically connected with a Radio Frequency, RF, connector installed on the mainboard; and
a downwardly protruding ground pin electrically connected to a ground point of the mainboard.

6. The built-in antenna module of claim 5, wherein the carrier defines a hole through which the feed pin and the ground pin are inserted, and the feed pin and the ground pin respectively being in electrical contact with the feed point and the ground point when the carrier is fixed to the mainboard.

7. The built-in antenna module of one of claims 1 to 6, wherein the carrier is injection molded of a synthetic resin, the communication radiator and the Bluetooth radiator respectively define a plurality of holes, and the communication radiator and the Bluetooth radiator are fixed to the top surface of the carrier by hot melt adhesion.

8. The built-in antenna module of one of claims 1 to 7, wherein the communication radiator and the Bluetooth radiator are made of a Flexible Printed Circuit Board, FPCB, of which a conductor is exposed on a top of the FPCB.

9. The built-in antenna module of claim 3, wherein the Bluetooth radiator includes a downwardly protruding feed pin that is electrically connected to a Bluetooth feed point, the Bluetooth feed point being electrically connected with a Bluetooth module mounted on the mainboard.

10. The built-in antenna module of claim 9, wherein the carrier defines a hole through which the feed pin of the Bluetooth radiator is inserted, and the feed pin of the Bluetooth radiator is in electrical contact with the Bluetooth feed point when the carrier is fixed to the mainboard.

11. A portable wireless terminal, comprising:
a mainboard;
a carrier fixed on the mainboard, the carrier having a top surface with a predetermined area and a side surface with a predetermined height;
at least one communication radiator fixed to a first predetermined portion of the top surface of the carrier; and
a Bluetooth radiator installed on a second predetermined portion of the top surface of the carrier,
wherein the at least one communication radiator and the Bluetooth radiator are electrically connected to the mainboard.

12. The portable wireless terminal of claim 11, wherein the communication radiator and the Bluetooth radiator are separately installed on the first and second predetermined portions of the top surface of the carrier to prevent electrical connection therebetween.

13. The portable wireless terminal of claim 12, wherein the communication radiator includes:
a downwardly protruding feed pin electrically connected to a feed point of the mainboard, the feed point being electrically connected with an RF connector installed on the mainboard; and
a downwardly protruding ground pin electrically connected to a ground point of the mainboard.

14. The portable wireless terminal of claim 12, wherein the Bluetooth radiator includes a downwardly protruding feed pin that is electrically connected to a Bluetooth feed point, the Bluetooth feed point being electrically connected with a Bluetooth module mounted on the mainboard.
